Europäisches Patentamt

**European Patent Office**

**Office européen des brevets**

(19)

(11) Publication number : **0 469 930 A2**

# EUROPEAN PATENT APPLICATION

(12)

(21) Application number : **91307145.2**

(22) Date of filing : **02.08.91**

(51) Int. Cl.⁵ : **C08G 69/48,** C08F 255/02,
C08F 257/02

(30) Priority : **03.08.90 US 563204**

(43) Date of publication of application :
**05.02.92 Bulletin 92/06**

(84) Designated Contracting States :
**BE DE ES FR GB IT NL**

(71) Applicant : **MELAMINE CHEMICALS, INC.**
**River Road, Highway No 18**
**Donaldsonville, Louisiana 70346 (US)**

(72) Inventor : **Moore, William Percy**
**408 Woodland Road, P.O. Box 1270**
**Hopewell, Virginia 23860 (US)**

(74) Representative : **Gallafent, Richard John et al**
**GALLAFENT & CO. 8 Staple Inn**
**London WCIV 7QH (GB)**

(54) **Ternary grafted non-burning thermoplastics containing s-triazine and heterocyclic compounds.**

(57) A fire retardant graft polymer having resistance to dripping and puddling on exposure to fire and the method of making such a graft polymer is described. The graft polymer includes as reactive components a thermoplastic polymer, at least one s-triazine compound and a heterocyclic compound having at least one oxygen or one nitrogen ring atom. The graft polymer is formed under conditions of controlled incipient depolymerization for the thermoplastic. The melting point of the thermoplastic is not reduced more than 30°C during the making of the fire retardant graft polymer. The physical properties of the thermoplastic are not degraded even though a high concentration of s-triazine component is contained in the final graft polymer.

EP 0 469 930 A2

The present invention is directed to a method of forming a ternary graft compound having as components thereof (1) at least one s-triazine, (2) a heterocyclic compound having at least one nitrogen or one oxygen ring atom, and (3) a thermoplastic compound, and to the fire and drip resistant, non-burning thermoplastics produced thereby, while substantially retaining or improving the physical properties of the thermoplastic. The graft compound is formed under conditions of incipient depolymerization for the thermoplastic.

It is known that the flammability of resins and plastics can be reduced by the addition of a fire retarding substance to the resin or plastic, including through the addition of an s-triazine compound. Resins and plastics which are known for combination with fire retardants include polyamides, acrylonitrile-butadiene-styrene and other thermoplastics.

The use of fire retarding s-triazine compounds alone, however, has not resulted in the production of effective fire resistant thermoplastic compounds until the disclosure in co-pending application 91304316.2. While s-triazine compounds when used in their non-resinous form have significantly reduced flammability when combined with most thermoplastics, the products produced have been found to have little practical value since the physical properties of the thermoplastics are reduced to the point of commercial unacceptability. Thus, when an s-triazine is utilized in an amount sufficient to make the thermoplastic non-burning, which is usually a requirement for high performance plastics, the physical properties of the thermoplastic are reduced to an unacceptable level. Non-burning thermoplastics which are to be used in high performance applications, must substantially retain their original tensile strength, flex modulus and elongation properties in order to effectively meet the requirements of their intended use.

Moreover, composites containing an s-triazine or an s-triazine derivative have not been fully satisfactory because of cost or complexity. For example, US-A-3,914,513 describes a method of making a self-extinguishing product which comprises a flammable substrate coated with a mixture of (1) polyethylene or polypropylene, (2) a mixture of chlorinated paraffin wax and antimony oxide, and (3) a mixture of pentaerythritol polyurethane and melamine phosphate. The complexity, toxicity and high cost of the mixture described is indicative of the present state of the art and of the need to find an effective fire retarding polyolefin composition.

US-A-4,328,139 discloses filled polypropylene homopolymer resins which are fire retarding and have desirable physical properties. However, these compositions are required to be filled with carbon black and a fire retardant obtained by heating a mixture of a polyol, a phosphoric oxide, and melamine. The melamine is thus converted to melamine phosphate. Although fire retardancy is obtained, it is necessary to combine the melamine with phosphate and to combine the melamine phosphate with large amounts of other materials, such as carbon black and a polyol, before effective fire retardancy is achieved.

US-A-4,253,972 describes fire retardant polyolefins made up of a polyolefin and a flame retardant additive of a pentate salt of amino-s-triazine with a polyhydric alcohol such as melammonium pentate which is the pentate salt of ammelide and pentaerythritol.

US-A-4,341,694 discloses a fire retardant for polyolefins made up of a bicyclic phosphate compound with a nitrogen containing compound such as melamine. Additionally, US-A-4,727,102 discloses a fire retardant polyolefin utilizing ammonium polyphosphate, melamine cyanurate, and a hydroxyalkyl isocyanuric acid to provide the fire retarding properties to the polyolefin.

Art describing the production of fire retardant graft or block copolymers includes US-A-3,888,822; 4,150,066; 4,203,882; and 4,331,780. Specifically, US-A-3,888,822 describes nylon treated with a heterocyclic compound containing at least one nitrogen atom and at least one sulfur atom. The heterocyclic compound, however, is not grafted to the nylon. Flame resistance is provided to the nylon by the heterocyclic compound by wetting the surface of the nylon with the heterocyclic compound, by adding the compound to the nylon polymerization reactants, or to a nylon melt prior to formation of a product from the nylon.

US-A-4,150,066 describes forming a fire retardant resin compound from a graft copolymer wherein the copolymer is obtained by the combination of an aromatic monoalkenyl monomer polymerized with a vinylcyano monomer and/or monomeric alkylester of acrylic acid or methacrylic acid in the presence of a diene-type rubber component; a chlorinated polyethylene; a tetrabromobisphenol A and antimony trioxide.

US-A-4,203,882 discloses self-extinguishing polymeric compositions based on a blend of two specified block copolymers and the additives of bismuth carbonate, a triazine compound, a chlorinated paraffin wax and a brominated organic compound.

US-A-4,331,780 describes the formation of a block copolymer from a polymerized monovinyl aromatic compound and a polymerized conjugated diene. The copolymer is made fire retardant by the addition of a fire retardant compound, such as an isocyanurate, by any means known in the art, for example hot mixing or solution blending.

Accordingly, the general problem underlying the invention is to produce a fire-retardant thermoplastic material without a complex combination of various distinct components and which avoids serious deterioration of the physical properties of the original thermoplastic. Specifically, it is desirable to provide a method of producing a non-burning thermoplastic material through the combination of a fire retardant with a thermoplastic wherein the thermoplastic produced by the combination is substantially drip and puddle resistant and substantially retains the physical properties of the original thermoplastic.

A further specific object of the present invention is to provide a method of producing a fire and drip resistant thermoplastic graft polymer wherein a non-resinous s-triazine, or mixture thereof, and a heterocyclic compound is grafted on to a thermoplastic polymer under conditions of incipient depolymerization for the thermoplastic.

A yet further specific object of the present invention is to provide a method of producing a thermoplastic graft polymer having a non-resinous s-triazine, or mixture thereof, and a heterocyclic compound present as a part of the polymer structure which involves incorporating from about 5%-45% of at least one s-triazine compound and from 0.1-5% of the heterocyclic compound into the thermoplastic structure under conditions of incipient depolymerization for the thermoplastic material, which results in polymers which have satisfactory or improved physical properties.

According to the present invention, the method of production involves preparing a non-burning, drip and puddle resistant thermoplastic ternary grafted polymer which substantially retains the physical properties of the original thermoplastic, by heating a thermoplastic polymer to the point of incipient depolymerization for the thermoplastic and, at that point, adding an s-triazine and heterocyclic compound for reaction with the thermoplastic polymer to provide a graft polymer.

The thermoplastic polymer is preferably present in an amount of more than one-half the total weight of the graft polymer produced, i.e. 50% or more by weight, and must have the ability to form stable side chain grafts with at least one non-resinous s-triazine compound and a heterocyclic compound having at least one oxygen or one nitrogen ring atom. Preferably, the thermoplastic is heated to the point of incipient depolymerization alone and thereafter the s-triazine compound(s) is admixed with the thermoplastic polymer while the thermoplastic is at the point of incipient depolymerization. The s-triazine compound(s) will be added in an amount of from about 5%-45% by weight of the total graft polymer. At approximately the same time that the s-triazine compound(s) is admixed with the thermoplastic polymer, a heterocyclic compound having at least one nitrogen or one oxygen ring atom is also admixed therewith. The heterocyclic compound will have from 4 to 6 carbon ring atoms in addition to the nitrogen and/or oxygen ring atom. The heterocyclic compound must be capable of opening reactively at the oxygen or nitrogen atom to allow grafting of the heterocyclic compound to the thermoplastic. The heterocyclic compound is utilized in an amount of from about 0.1%-5% by weight of the total graft polymer.

In an alternative embodiment, the thermoplastic, s-triazine(s) and heterocyclic compound can be premixed and the premix heated to produce the required reaction conditions as set forth herein, i.e. incipient depolymerization for the thermoplastic.

The present invention is directed to a non-burning fire retardant material resistant to dripping and puddling in fire environments and to a method of making the fire retardant product. The method involves grafting at least one s-triazine compound and a heterocyclic compound to a thermoplastic polymer without detrimentally affecting the physical properties of the thermoplastic polymer. The physical properties of particular concern are the flexibility, tensile strength and elongation or elasticity of the plastic formed.

When referring to a "non-burning" thermoplastic product, it is understood to mean that the product is capable of being rated V-O under the Underwriters Laboratory (U.L.) Test Method 94. U.L. Test Method 94 determines the distance which a test piece burns before it self-extinguishes as described in U.L. literature describing the test procedure. A V-O rating indicates that the test piece did not burn for any appreciable time or distance when the test piece was removed from a fire source.

The terms "drip" and "puddle" refer to the characteristic of most thermoplastic solids upon their exposure to the high temperature conditions to melt and form low viscosity liquids which flow or drip in a high temperature or fire environment. Puddling occurs when solid thermoplastics melt to form low viscosity liquids which form puddles of thin liquid resin. This liquid resin becomes separated from any fire retarding solid or solids which may have been originally blended with the thermoplastic. Dripping is a similar characteristic but occurs before puddling. Puddling and dripping substantially reduce or eliminate the beneficial effects of most solid fire retardants present in or with the thermoplastic and can actually spread a fire to new fuels or areas.

The method of preparing the product of the present invention can be carried out using conventional equipment of the thermoplastic industry such as, for example, the ZSK Twin Screw machine produced by the Werner & Pfleiderer Corporation, which is capable of melting, mixing and extruding various materials. A preferred method of the present invention is as follows: (1) a thermoplastic polymer which is capable of forming grafts with an s-triazine compound and a heterocyclic compound having at least one nitrogen or one oxygen ring atom is heated to a temperature above the thermoplastic's melting point where the thermoplastic undergoes incipient depolymerization; (2) at least one s-triazine compound and a heterocyclic compound having at least one nitrogen or one oxygen ring atom is admixed with the thermoplastic where incipient depolymerization occurs and the mixture held under these conditions until a graft polymer is formed; and (3) the graft polymer obtained is cooled to prevent further depolymerization.

The graft polymer produced according to this invention is thus a ternary graft polymer. The three components of the ternary graft polymer are understood in the description of the present invention to include (1) the thermoplastic, (2) the s-triazine or a mixture of s-triazines, and (3) a heterocyclic compound having at least one nitrogen or one oxygen ring atom.

Incipient depolymerization, as the term is used according to this invention, is the point at which depolymerization of the thermoplastic is just starting. The incipient depolymerization can be created by heat alone, a catalyst or a combination of heat and a catalyst. The preferred method is by heat alone. Generally, it is not necessary or desirable to add a depolymerization catalyst since a small amount of catalyst is usually present in commercially available thermoplastics. However, if a catalyst is used, it is used in a minimal amount, such as from about 0.01%-0.1%.

To obtain incipient depolymerization, the thermoplastic is heated to a temperature above its melting point. An effective temperature is from about 10° to 50°C, and preferably from about 15°-35°C, above the melting point of the thermoplastic. Under conditions of incipient depolymerization, the molecular weight of the thermoplastic and its melting point are not to be reduced significantly. Reduction in the melting point of the thermoplastic should be in the range of from no more than about 0°C-30°C and is preferably in the range of from between 5°C and 15°C. Larger melting point reductions indicate the occurrence of more depolymerization than is required for the formation of satisfactory grafts in the present invention and will lead to degradation of polymer properties and limit the usefulness of the thermoplastics.

Under incipient depolymerization conditions, the bonds which hold the thermoplastic polymer together become loose thereby allowing the s-triazine component and heterocyclic component to form side chain additions to the main backbone polymer chain. The incipient depolymerization conditions are maintained for a time sufficient to allow for the grafts to form. Under the conditions described herein, the retention or hold time of the reactants under conditions of incipient depolymerization is generally from about 5-200 seconds and preferably, from about 10-30 seconds. The time required will be decreased by the severity of the depolymerization conditions imposed. Further, when depolymerization catalysts are present, the preferable retention time is at the lower end of the above-described range. A mere blending of the reactants of the present invention will not provide an effective ternary graft even if the blending is carried out at elevated temperatures. It is necessary that the main polymer chain of the thermoplastic be heated with or without depolymerization catalysts to the point where depolymerization is just starting as indicated by the melting point reduction of the thermoplastic. The quality of the graft achieved has been found to be closely related to the control of the retention time, i.e. the time at which the reactants are held under the conditions of incipient depolymerization.

As an alternative embodiment to the preferred method described above, the thermoplastic polymer, s-triazine, and heterocyclic compounds can be premixed prior to heating so long as the mixture is within the prescribed limits described herein and subjected to the required reaction conditions. If the reactants are premixed, the premixed reactants are rapidly heated in a strongly agitated mixer until the thermoplastic melts, incipient depolymerization occurs and the thermoplastic melting point decreases. The ternary graft between the thermoplastic, the s-triazine and the heterocyclic compound is then formed. Thereafter, the graft product can be continuously extruded from the mixer-reactor into a turbulent cooling medium to solidify the graft as pellets.

Whichever method is utilized, the reaction components can be present as either powders, granules or liquids.

Thermoplastics suitable for use in the present invention include thermoplastics having a melting point of from about 120°C-400°C and which can be brought to the point of incipient depolymerization by thermal or catalytic means at temperatures near their melting point. Thermoplastics which have been found to form effective ternary grafts with s-triazines and heterocyclic compounds according to the method of the present invention, include, for example, one or more polyolefins, polyamides, polycarbonates, polyurethanes, polyesters, polystyrene, polyacrylonitrile, and polyacrylonitrile-butadiene-styrene. Suitable polyolefins include polypropylene, polyethylene or the like.

S-triazine compounds which are suitable for use in the method of the present invention include non-resinous s-triazine compounds, i.e., compounds which have not been polymerized, such as melamine, ammeline, ammelide, cyanuric acid, and the like, as well as their additive reaction products, such as melamine cyanurate, melamine phosphate, cyanuric chloride, tris-hydroxymethylisocyanurate, tris-hydroxyethylisocyanurate, tris-hydroxypropylisocyanurate, triallyl isocyanurate, hydroxymethyl melamine, and the like. S-triazines having short side chains are generally most effective. The preferred compounds are the simple s-triazines and the most preferred compound is melamine.

One or more s-triazines can be used as a reaction component in the present invention. As the method of the invention is described herein, if a singular term is utilized, it is understood that a mixture can also be utilized in the same manner.

The amount of s-triazine required to produce a non-burning thermoplastic graft polymer will vary depending on the original flammability of the thermoplastic polymer. The variation can range from about 5%-45% by weight of the s-triazine based on the total weight of the graft polymer. The preferred range of s-triazine incorporated is from about 7%-35% and, most preferably, from about 10%-35% of the total graft polymer. When smaller amounts of s-triazine compounds are used, resistance to puddling and dripping in the presence of fire or high temperature is reduced. When more than 45% of an s-triazine is incorporated into the ternary graft, i.e., when the amount of heterocyclic compound included in the graft is increased to the point that elasticity and flexibility are at more desirable levels, the tensile strength of the graft is reduced below acceptable levels.

The s-triazine component used in forming the ternary graft polymer is preferably present as a solid particle of powder and admixed with the molten thermoplastic polymer at approximately the same time as the heterocyclic compound is admixed thereto. The s-triazine particles preferably have a diameter averaging 50 microns or less, and preferably are from about 1-15 microns.

The heterocyclic compound suitable for use in the present invention is a compound having a closed ring structure in which one or more of the atoms in the ring is an element other than carbon and is preferably oxygen and/or nitrogen. The preferred heterocyclic compounds contain from about 4 to 6 ring carbon atoms and at least one additional ring atom consisting of an oxygen or nitrogen atom. The heterocyclic compounds must be capable of opening at a non-carbon ring atom to form a reactive site so that the heterocyclic compound can form a grafted side chain on the main backbone chain of the thermoplastic polymer.

Examples of preferred heterocyclic compounds include organic acid anhydrides, in particular aliphatic acid anhydrides, and lactams. The most preferred heterocyclic compounds are ε-caprolactam, and maleic anhydride.

The amount of the heterocyclic compound utilized in forming the ternary graft polymer is an amount less than that of the s-triazine component. Effective amounts of the heterocyclic compound are from about 0.1%-5.0% by weight of the total graft polymer. The amount of heterocyclic compound required to provide a satisfactory ternary graft polymer increases as the amount of the s-triazine component increases. Generally, heterocyclic concentrations below 0.1% are insufficient to provide stabilization of the physical properties of a fire resistant thermoplastic and do not provide adequate contribution to the ternary graft. Concentrations of the heterocyclic compound higher than 5% generally result in the presence of excess heterocyclic material. This excess material undesirably decreases the tensile strength of the thermoplastic.

Other additives as conventionally known can be introduced into the final graft product after the ternary graft polymer is formed to affect the final properties of the graft composition. Such additives include, for example, fibrous materials, such as fiberglass, and oxidation inhibitors.

Example 1

While a variety of thermoplastics have been found to form effective ternary grafts with s-triazines and heterocyclic compounds according to the present invention, one of the most effective systems from the standpoint of broad utility, technical effectiveness and low cost is based on the thermoplastic polypropylene, melamine and ε-caprolactam. A range of melamine concentration is effective in producing a non-burning U.L.-94 V-O rated polypropylene-based graft compound, however, the most effective and economically preferred range is from about 15%-45% based on the total weight of the polypropylene-based graft product and most preferably from about 25%-35%. The heterocyclic compound ε-caprolactam, which contains six carbon and one nitrogen ring atoms, opens readily and reactively at the nitrogen site to form a ternary side chain graft with the polypropylene and the melamine. The ε-caprolactam is effective in small amounts in the polypropylene-based graft compound, i.e. usually from about 1%-10% based on the weight of the melamine which amounts to from about 0.2%-1.0% based on the weight of the total graft product. Most preferably, ε-caprolactam is present in an amount between about 0.4%-0.6% by weight of the total product.

The polypropylene, melamine, and ε-caprolactam ternary graft is effectively formed under incipient depolymerization conditions at temperatures between from about 140°-170°C without the addition of an added catalyst. Preferably, the graft is formed in a continuous mixer-reactor using a retention time of between from about 10-30 seconds followed immediately by quenching the product in cold water. The ingredients are preferably premixed prior to the graft forming reaction.

A more specific example illustrating the method of preparing a non-burning, drip and puddle resistant ternary graft thermoplastic using polypropylene as the backbone polymer, melamine as the s-triazine, and ε-caprolactam as the heterocyclic compound is set forth below and denoted as Example 1A.

Example 1A

In a rotary drum blender, components totaling 136 Kg in weight were evenly combined at atmospheric pressure and ambient temperature. The components of the mixture were as follows:

| Components | Wt.% |
|---|---|
| Polypropylene | 69.5 |
| Melamine powder | 30.0 |
| ε-caprolactam | 0.5 |

The polypropylene was in the form of pellets having a melting point of 127°C. The melamine was present as a powder wherein 40% of the particles had a diameter of between 1-10 microns and 60% of between 1-5 microns. The heterocyclic compound ε-caprolactam used was assayed to be 97%.

The mixture was charged in a continuous manner into an electrically heated and controlled ZSK Twin Screw Blender-Reactor produced by the Werner & Pfleiderer Corporation. In the Blender-Reactor, the mixture was rapidly heated to 160°C resulting in the polypropylene backbone polymer melting and being heated to the point of incipient depolymerization. While the polymer was at the point of incipient depolymerization, the ε-caprolactam heterocyclic ring opened at the nitrogen atom and reacted with the polypropylene polymer. At the same time, the melamine reacted with the polypropylene polymer resulting in the formation of a ternary graft compound.

The reaction forming the ternary graft polymer occurred as the materials moved through the heated ZSK Twin Screw Machine in a continuous manner. The reactants were retained under the reaction conditions within the Blender-Reactor for a time period of 22 seconds. The turbulent and homogeneous blending and the reaction of the ingredients occurred with essentially no back mixing of the reacting or reacted products with the unreacted raw materials.

The ternary graft compound was continuously extruded as a high viscosity, stiffly pliable paste through a high speed pellet-forming cutter into a turbulent stream of cool water which almost instantly solidified the paste into hard pellets.

Example 1B

This example illustrates that the product of Example 1A is an effective non-burning ternary graft thermoplastic composition which retained the desired physical properties of the original thermoplastic while additionally being non-burning and resistant to dripping and puddling.

The pellets produced in Example 1A were injection molded into suitably sized test pieces and physically tested and evaluated according to the A.S.T.M. physical test methods for plastics. The original polypropylene thermoplastic was tested under the same conditions. The data resulting from the tests are as follows:

| Material | Polypropylene | Example 1A Product |
|---|---|---|
| Tensile Strength | 5400 | 5200 |
| Percent Elongation | 16 | 18 |
| Flex Modulus, Kg/m$^2$ | $100 \times 10^6$ | $117 \times 10^6$ |
| U.L. Method 94 | Flammable | Non-burning |

Example 2

This example illustrates that non-resinous s-triazine compounds other than melamine can be reacted with different heterocyclic compounds and thermoplastics to form non-burning ternary thermoplastic grafts.

Using the same apparatus as described in Example 1A, components totaling in weight to 300 pounds were premixed with the components being as follows:

6

| Components | Wt.% |
|---|---|
| Acrylonitrile-butadiene-styrene Resin.... | 59.0 |
| Melamine Cyanurate...................... | 40.0 |
| Maleic Anhydride........................ | 1.0 |

The acrylonitrile-butadiene-styrene resin was present in the form of pellets. Melamine cyanurate was present as a very fine dry powder having particles with diameters ranging from between 1 and 5 microns. The maleic anhydride was a commercial commodity product assayed to be 98%.

The reaction mixture was retained in the continuous Werner & Pfleiderer Corporation Blender-Reactor at 220°C for 28 seconds. Thereafter, the mixture was quick quenched with water to produce hard granules. The granules received a non-burning V-O rating under the U.L.-94 test method.

Example 3

This example further illustrates that an s-triazine compound can be reacted with a heterocyclic compound containing 4 to 6 carbon ring atoms and an oxygen or nitrogen ring atom and a thermoplastic compound to form a non-burning ternary thermoplastic graft.

Using the apparatus described in Example 1A, components totaling in weight to 300 pounds were premixed with the components being as follows:

| Components | Wt.% |
|---|---|
| Nylon 6 | 89.2 |
| $\epsilon$-Caprolactam | 0.8 |
| Melamine Cyanurate | 10.0 |

The Nylon 6 was in the form of pellets. The melamine cyanurate was a very fine powder having particles with diameters ranging from between 1 and 5 microns. The ε-caprolactam was a commercial commodity product assayed to be 98%.

The reaction mixture was retained in the continuous Blender-Reactor at 280°C for 15 seconds. Thereafter, the mixture was quick quenched with water to produce hard granules. The granules received a non-burning V-O rating under the U.L.-94 test method.

Example 4

This example illustrates the resistance to dripping and puddling of compositions prepared according to the present invention. The products prepared in Examples 1A, 2, and 3, amounting to 20 grams each, were placed in the middle of separate 1/2″ x 4″ x 12″ dry pine boards. The pine boards were secured at a 40° angle to horizontal and gas fired from beneath the boards until the boards burned vigorously. The gas fire was removed and the boards were allowed to burn until they were largely consumed. During the burning of the boards, the products of Examples 1A, 2, and 3 did not drip or run down the boards. When the pine boards burned out, the areas located beneath the ternary graft products were discolored, but not burned or consumed by the fire.

Example 5

This examples illustrates the effectiveness of the graft products prepared according to the process of the present invention when an inert filler is added to the reaction mixture to increase a particular desired property or properties of the final ternary graft product.

Using the apparatus described in Example 1A, components totaling in weight to 300 pounds were premixed with the components being as follows:

| Components | Wt.% |
|---|---|
| Nylon 66 | 69.0 |
| ε-Caprolactam | 1.0 |
| Melamine | 10.0 |
| Fiberglass | 20.0 |

The Nylon 66 was present in the form of pellets. The melamine was present as a fine powder having particles with diameters ranging from between 5 and 10 microns. The ε-caprolactam was a commercial commodity product assayed to be 98%. The fiberglass was a chopped commercial fiberglass without any special sizing.

The reaction mixture was retained in the continuous Blender-Reactor at 380°C for 15 seconds. Thereafter, quick quenching of the product was carried out to produce homogeneous hard granules. The granules received a non-burning V-O rating under the U.L.-94 test method. The tensile strength of the graft product containing the fiberglass was $11.25 \times 10^6$ Kg/m$^2$. The tensile strength of the original Nylon 66 was $7.73 \times 10^6$ kg/m$^2$.

The compositions and method of the present invention are useful in injection molding of slab plastic boards, and generally for engineering plastics. The products formed from the compositions of the present invention can be used in the manufacture of microwave ovens, television and radio cabinets, air ducts in heating and cooling operations, furniture, construction and building members, engineering plastics and other conventionally known uses for non-burning thermoplastic compositions.

As will be apparent to one skilled in the art, various modifications can be made within the scope of the aforesaid description. Such modifications being within the ability of one skilled in the art form a part of the present invention and are embraced by the appended claims.

**Claims**

1. A method of making a graft polymer resistant to dripping and puddling when exposed to fire comprising admixing a thermoplastic material with at least one s-triazine compound and a heterocyclic compound having at least one nitrogen or one oxygen ring atom, the thermoplastic material being present in an amount of from at least 50% by weight based on the total weight of the mixture and being capable of forming a graft polymer with the at least one s-triazine compound and the heterocyclic compound at incipient depolymerization conditions, the s-triazine being present at from about 5%-45% by weight based on the weight of the total mixture and the heterocyclic compound being present at from about 0.1%-5% by weight based on the weight of the total mixture; subjecting the admixture to controlled incipient depolymerization to form a graft polymer of the s-triazine, the heterocyclic compound and the thermoplastic material; and cooling the graft polymer to prevent further depolymerization.

2. A method according to Claim 1 wherein the thermoplastic material is heated to an incipient depolymerization temperature and then the s-triazine and heterocyclic compounds are admixed with the thermoplastic material.

3. A method according to Claim 1 wherein the thermoplastic material, s-triazine and heterocyclic compound are admixed and then the admixture is heated to an incipient depolymerization temperature.

4. A method according to any one of Claims 1 to 3 wherein the incipient depolymerization is carried out at a temperature above the melting point of the thermoplastic.

5. A method according to any one of Claims 1 to 4 wherein the s-triazine is melamine, ammeline, ammelide, cyanuric acid, or an additive reaction product thereof.

6. A method according to any one of Claims 1 to 5 wherein the s-triazine compound is present in the form of particles having a particle size of 50 microns or less in diameter.

7. A method according to any one of Claims 1 to 6 wherein the thermoplastic material is a polyolefin, polyamide, polycarbonate, polyurethane, polyester, polystyrene, polyacrylonitrile, or polyacrylonitrile-butadiene-styrene.

8. A method according to any one of Claims 1 to 7 wherein the heterocyclic compound has from 4 to 6 carbon ring atoms.

9. A method according to Claim 8 wherein the heterocyclic compound is an organic acid anhydride or a lactam.

10. A method according to any one of Claims 1 to 9 wherein the melting point of the thermoplastic material is not reduced more than 30°C during the method.

11. A graft polymer resistant to dripping and puddling when exposed to fire comprising from about 5%-45% by weight based on the weight of the total mixture of at least one s-triazine compound, from about 0.1%-5% by weight based on the weight of the total mixture of a heterocyclic compound having at least one oxygen or one nitrogen ring atom, and a thermoplastic material present in an amount of at least 50% by weight based on the weight of the total mixture, the graft polymer being formed from the s-triazine compound, the heterocyclic compound and the thermoplastic material under conditions of controlled incipient depolymerization for the thermoplastic.

12. A graft polymer according to Claim 11 wherein the incipient depolymerization occurs at a temperature above the melting point of the thermoplastic.

13. A graft polymer according to Claim 11 or 12 wherein the s-triazine is melamine, ammeline, ammelide, cyanuric acid or an additive reaction product thereof.

14. A graft polymer according to Claim 11, 12 or 13 wherein the s-triazine compound is present in the form of particles having a particle size of 50 microns or less in diameter.

15. A graft polymer according to any one of Claims 11 to 14 wherein the thermoplastic material is a polyolefins, polyamide, polycarbonate, polyurethane, polyester, polystyrene, polyacrylonitrile, or polyacrylonitrile-butadiene-styrene.

16. A graft polymer according to any one of Claims 11 to 15 wherein the melting point of the thermoplastic material is not reduced more than 30°C during the formation of the graft polymer under conditions of incipient depolymerization.

17. A graft polymer according to any one of Claims 11 to 16 wherein the heterocyclic compound has from 4 to 6 carbon ring atoms.

18. A graft polymer according to Claim 17 wherein the heterocyclic compound is an organic acid anhydride or a lactam.

9